(19) Europäisches Patentamt
European Patent Office
Office européen des brevets

(11) EP 1 445 290 B1

(12) EUROPEAN PATENT SPECIFICATION

(45) Date of publication and mention
of the grant of the patent:
13.01.2010 Bulletin 2010/02

(51) Int Cl.:
*C09D 5/03* (2006.01) *B05D 7/24* (2006.01)

(21) Application number: 02726430.8

(86) International application number:
PCT/JP2002/004757

(22) Date of filing: 16.05.2002

(87) International publication number:
WO 2002/094950 (28.11.2002 Gazette 2002/48)

(54) POWDER COATING COMPOSITION, PROCESS FOR PRODUCING THE SAME, AND COATING FILM MADE FROM THE SAME

PULVERLACK, VERFAHREN ZU DESSEN HERSTELLUNG UND DARAUS HERGESTELLTE LACKIERUNG

COMPOSITION DE REVETEMENT EN POUDRE, PROCEDE DE PRODUCTION DE CETTE COMPOSITION ET FILM DE REVETEMENT REALISE A PARTIR DE CETTE COMPOSITION

(84) Designated Contracting States:
AT DE FR GB

(30) Priority: 24.05.2001 JP 2001155384

(43) Date of publication of application:
11.08.2004 Bulletin 2004/33

(73) Proprietor: TOYO ALUMINIUM KABUSHIKI KAISHA
Chuo-ku
Osaka-shi
Osaka 541-0056 (JP)

(72) Inventors:
• TAKANO, Yasushi
  Kashihara-shi, Nara 634-0007 (JP)
• NIIZAKI, Touru,
  Toyo Aluminium Kabushiki Kaisha
  Osaka-shi, Osaka 541-0056 (JP)

(74) Representative: Bockhorni & Kollegen
Elsenheimerstrasse 49
80687 München (DE)

(56) References cited:
JP-A- 50 124 935     JP-A- 52 128 927

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a powder coating composition containing a pigment, a manufacturing method thereof, and a coating film obtained by using the composition, and more particularly to a new metallic powder coating composition obtained by adhering a flake pigment onto a thermosetting resin powder surface as well as a coating film obtained by using the composition.

Background Art

As a low-pollution coating without using an organic solvent, there has been a growing demand for a powder coating in fields such as automobile parts, electric appliances, furniture, machine tool, business equipment, toys and the like. Coating with the powder coating causes low pollution. In addition, sufficient thickness of the coating film can be achieved by one time application, and it is not necessary to apply coating many times as in an example using a conventional solvent-type coating. That is, a time period for coating can be shortened. Moreover, as the solvent is not contained in the coating, the powder coating is advantageous in that a pinhole will not be created in the coating film.
In the powder coating with a property as described above, a coating film property is excellent if a metal pigment such as metal flake is not contained, presenting no problem. On the other hand, if a flake metal pigment is contained, following problems will arise.
Examples of a conventional method of metallic coating with a powder coating include: a melt blending method in which a flake pigment is sufficiently mixed and kneaded with a resin or a coloring pigment in advance using a melting method, and thereafter a resultant substance is pulverized by crushing or the like; a dry blending method in which resin powder and a flake pigment are mixed and applied; and a bonded method using resin powder having its surface adhered to a flake pigment (Japanese Patent Laying-Open No. 51-137725, Japanese Patent Laying-Open No. 9-71734, US Patent No. 4,138,511, and the like).
In the melt blending method, the flake pigment tends to be deformed during the step of mixing and kneading or the subsequent step of controlling a resin powder particle size by crushing, and excellent metallic feel cannot be obtained after coating. In addition, when aluminum flake is used as the flake pigment, an active surface of aluminum is exposed during crushing, and possibility of ignition, dust explosion or the like will be larger.
In the dry blending method, deformation of the flake pigment is relatively unlikely. On the other hand, as the pigment needs to bear electrical charges during coating, a surface should be coated with a resin in advance, if a metal pigment such as aluminum flake is used. In addition, as the pigment and the resin powder have different charged rate respectively, a separation phenomenon between the resin powder and the metal pigment takes place during coating, resulting in lower performance in terms of design of the coating film. Further, percentage of content of the pigment varies before and after application of the powder coating. Therefore, if the coating is recovered for reuse, color tone is altered. This means that recycle of the coating is virtually impossible.
The bonded method includes a method of adhering the flake pigment to a resin powder surface with a brush polisher, and a method of transferring and adhering metal flake to the resin powder by causing the resin powder to come in contact with a distributing medium such as an alumina ball covered with the metal flake, and the like. In such bonded methods, the flake pigment and the resin are pressed and adhered by physical stress. Accordingly, deformation of the flake pigment tends to occur, and excellent metallic feel cannot be obtained. In addition, adhesion is not strong. This fact is advantageous in that blocking among resin powders is unlikely, whereas free particles of the flake pigment that do not adhere to the resin powder considerably remain. If an amount of the free flake pigment increases, a blending ratio of the resin to the flake pigment is varied due to a difference in adhesion efficiency when the coating is recovered for reuse, whereby the coating cannot be reused after it is recovered as in the case of the dry blending. Moreover, if the metal pigment such as aluminum flake is used, the possibility of ignition or dust explosion becomes higher. Weak adhesion between the resin powder and the flake pigment is noticeable particularly when the flake pigment has a large particle size. Excellent brilliance and high brightness achieved only by using such a flake pigment have been difficult to achieve with the bonded aluminum obtained by using these methods.
From the viewpoint described above, development of a powder coating composition having excellent recyclability, manufactured in process steps with low risk and applied with a safe method, and containing a flake pigment with improved metallic feel, brilliance and brightness of the coating film has strongly been demanded. Such a powder coating composition, however, has not yet been developed.

Disclosure of the Invention

A principal object of the present invention is to provide a powder coating composition having excellent recyclability, presenting less risk, and containing a flake pigment providing metallic feel, brilliance and brightness to a coating film, as well as a coating film obtained from the former.

In order to solve the problems in the conventional art, the present inventor has paid attention to improving adhesion between the flake pigment and the resin powder and preventing adhesion among resin powders. As a result, the present inventor has found that the powder coating composition obtained by adhering the flake pigment to the resin powder using an adhesive binder can achieve the above-described object, and completed this invention.

A powder coating composition according to the present invention is a powder coating composition containing thermosetting resin powder having a surface adhered to a flake pigment using an adhesive binder.

Preferably, the adhesive binder is a resin dissolved in a solvent which does not dissolve the thermosetting resin. In addition, the solvent which does not dissolve the thermosetting resin desirably has a boiling point in a range of 28 to 130°C under an atmospheric pressure. The adhesive binder desirably is an oligomer having a number-average molecular weight in a range of 300 to 2000 and having a softening point in a range of 30 to 180°C.

Preferably, the flake pigment is an aluminum flake. The aluminum flake desirably has an average particle size in a range of 1 to 100μm.

In addition, the present invention includes a coating film obtained by powder-coating a base member with the powder coating composition described above, followed by thermosetting.

The present invention includes a method of manufacturing a powder coating composition, including the steps of: mixing and kneading a flake pigment, thermosetting resin powder, a solvent which does not dissolve the thermosetting resin, and an adhesive binder, and wetting a resultant substance obtained by the mixing and kneading step, followed by drying the wet substance while continuing to mix and knead the same.

In such a case, it is preferable to keep the substance in a temperature range of -5 to 50°C while it is mixed and kneaded and then dried. Moreover, it is desirable to perform the step of drying by vacuuming.

Brief Description of the Drawings

Fig. 1 is a graph illustrating a relation between an L value and an observation angle (θ) of a coating film obtained from a powder coating composition using bonded aluminum in Example 3 of the present invention, in comparison with Comparative Example 2.

Figs. 2A and 2B show an adhesion state between aluminum flake and a thermosetting resin, comparing an electron micrograph (magnification of 200 times) of Example 2 of the present invention with an electron micrograph (magnification of 300 times) of Comparative Example 1.

Figs. 3A and 3B show an adhesion state between the aluminum flake and the thermosetting resin, comparing electron micrographs (magnification of 1000 times in both micrographs) of Example 2 and Comparative Example 1 of the present invention.

Figs. 4A and 4B show an adhesion state between the aluminum flake and the thermosetting resin, comparing electron micrographs (magnification of 300 times in both micrographs) of Example 3 and Comparative Example 2 of the present invention.

Figs. 5A and 5B show an adhesion state between the aluminum flake and the thermosetting resin, comparing electron micrographs (magnification of 1000 times in both micrographs) of Example 3 and Comparative Example 2 of the present invention.

Figs. 6A and 6B show an adhesion state between the aluminum flake and the thermosetting resin, comparing electron micrographs (magnification of 300 times in both micrographs) of Example 4 and Comparative Example 3 of the present invention.

Figs. 7A and 7B show an adhesion state between the aluminum flake and the thermosetting resin, comparing electron micrographs (magnification of 1000 times in both micrographs) of Example 4 and Comparative Example 3 of the present invention.

Figs. 8A and 8B show an adhesion state between the aluminum flake and the thermosetting resin, comparing electron micrographs (magnification of 300 times in both micrographs) of Example 5 and Comparative Example 4 of the present invention.

Figs. 9A and 9B show an adhesion state between the aluminum flake and the thermosetting resin, comparing electron micrographs (magnification of 1000 times in both micrographs) of Example 5 and Comparative Example 4 of the present invention.

Figs. 10A and 10B show an adhesion state between the aluminum flake and the thermosetting resin, in connection with electron micrographs (magnification of 300 times and 2000 times respectively) of Example 1 of the present invention.

Figs. 11A and 11B show an adhesion state between the aluminum flake and the thermosetting resin, in connection with electron micrographs (magnification of 300 times and 2000 times respectively) of Comparative Example 6 of the present invention.

Figs. 12A and 12B show an adhesion state between the aluminum flake and the thermosetting resin, in connection with electron micrographs (magnification of 300 times and 1000 times respectively) of Example 7 of the present invention.

Figs. 13A and 13B show an adhesion state between the aluminum flake and the thermosetting resin, in connection with electron micrographs (magnification of 300 times and 1000 times respectively) of Example 8 of the present invention.

Figs. 14A and 14B show an adhesion state between the aluminum flake and the thermosetting resin, in connection with electron micrographs (magnification of 300 times and 1000 times respectively) of Comparative Example 9 of the present invention.

Best Modes for Carrying Out the Invention

A powder coating composition according to the present invention contains thermosetting resin powder having its surface adhered to a flake pigment using an adhesive binder.

Examples of the flake pigment used for the powder coating composition according to the present invention include metal flake such as aluminum, zinc, copper, bronze, nickel, titanium, or stainless steel, and alloy flake thereof. Among those pigments, aluminum flake is particularly suitable because it has excellent metallic luster, and is inexpensive and easy to handle by virtue of its small specific gravity.

Preferably, the aluminum flake normally has an average particle size of 1 to 100$\mu$m, and more preferably of 3 to 60$\mu$m. Preferably, the aluminum flake normally has an average thickness of 0.01 to 5$\mu$m, and more preferably of 0.02 to 2$\mu$m. In addition, it is particularly preferable for the aluminum flake to have a shape factor, obtained by dividing the average particle size by the average thickness, in a range of approximately 5 to 100.

If the average particle size is over 100$\mu$m, the flake pigment protrudes from the coating film surface, and smoothness or reflection performance of the coating surface tends to be deteriorated. On the other hand, if the average particle size is smaller than 1$\mu$m, metallic feel or brilliance tends to be deteriorated. If the average thickness is over 5$\mu$m, smoothness or reflection performance of the coating surface tends to be deteriorated, as well as cost for manufacturing may be increased. If the average thickness is smaller than 0.01$\mu$m, not only the strength tends to be lowered but also working during manufacturing step may be made difficult.

The average particle size of the flake pigment is found by calculating an average volume from particle size distribution measured by a known method of measuring particle size distribution such as laser diffractometry, micromesh sieve, or Coulter counter. Average thickness is calculated from covering power and density of the flake metal pigment.

An agent assisting crushing and flattening added in crushing and flattening may be adsorbed on the surface of the aluminum flake. Examples of such an agent include fatty acid (oleic acid, stearic acid), aliphatic amine, aliphatic amide, aliphatic alcohol, ester compound, and the like. These agents are effective in suppressing unnecessary oxidization of the aluminum flake surface so as to improve luster thereof.

An amount of adsorption of the agent is preferably less than 2 parts by weight with respect to 100 parts by weight of aluminum flake. If the amount is equal to or larger than 2 parts by weight, the surface luster may be deteriorated.

In order to add a variety of colors to the flake pigment, a variety of coloring agents or coloring pigments can be adhered to the surface of the flake pigment. Examples of such coloring agents or coloring pigments include quinacridon, diketopyrrolopyrrole, isoindolinone, indanthrone, perylene, perynone, anthraquinone, dioxazine, benzoimidazolone, triphenylmethane quinophthalone, anthrapyrimidine, chrome yellow, pearl mica, transparent pearl mica, colored mica, interference mica, phthalocyanine, phthalocyanine halide, azo pigment (azomethine metal complex, condensed azo etc.), titanium oxide, carbon black, iron oxide, copper phthalocyanine, condensed polycyclic, and the like.

Though a method of adhering the coloring pigment to the flake pigment is not particularly limited, a method of adhering the coloring pigment to the flake pigment by coating the coloring pigment with a dispersant, followed by stirring and mixing the coloring pigment with the flake pigment in a nonpolar solvent is preferably used.

Examples of the dispersant include aromatic carboxylic acid such as benzoic acid, vinyl benzoate, salicylic acid, anthranilic acid, m-aminobenzoic acid, p-aminobenzoic acid, 3-amino-4-methylbenzoic acid, 3,4-diaminobenzoic acid, p-aminosalicylic acid, 1-naphthoic acid, 2-naphthoic acid, naphtenic acid, 3-amino-2-naphthoic acid, cinnamic acid, and aminocinnamic acid; amino compound such as ethylenediamine, trimethylenediamine, tetramethylenediamine, pentamethylenediamine, hexamethylenediamine, 1,7-diaminoheptane, 1,8-diaminooctane, 1,10-diaminodecane, 1,12-diaminododecane, o-phenylenediamine, m-phenylenediamine, p-phenylenediamine, 1,8-diaminonaphthalene, 1,2-diaminocyclohexane, stearylpropylenediamine, N-P-(aminoethyl)-$\gamma$-aminopropyltrimethoxysilane, and N-P-(aminoethyl)-$\gamma$-aminopropylmethyldimethoxysilane; and aluminum or titanium chelate compound.

Similarly, in order to add a variety of colors to the flake pigment, an interference film can be formed on the surface of the flake pigment. The method thereof is not particularly limited. For example, in order to form an optical interference oxide film on the surface of individual particles of the metal flake, a method of forming an air oxide film on the surface by heating the metal flake to approximately 300 to 700˚C in an atmosphere where an amount of oxygen is controlled, or a method of coating the flake metal pigment with a precursor of an oxide such as transition metal followed by heating and decomposing is preferably used.

In addition, in order to provide chemical resistance, water resistance or weather resistance to the flake pigment, a resin layer can be formed on the surface of the flake pigment. Though the method thereof is not particularly limited, a method of precipitating a polymer on the surface of the metal flake by polymerizing a monomer by adding a polymeric monomer to a slurry where the metal flake is dispersed in an organic solvent and adding thereto a polymerization initiator such as azobisisobutyronitrile or benzoyl peroxide while heated in an inert gas atmosphere.

Examples of the polymeric monomer to be used include acrylic acid, methacrylic acid, methyl methacrylate, butyl acrylate, 2-ethylhexyl acrylate, lauryl acrylate, stearyl acrylate, cyclohexyl acrylate, 2-hydroxyethyl acrylate, 2-hydroxybutyl acrylate, 2-methoxyethyl acrylate, 2-diethylaminoethyl acrylate, butyl methacrylate, octyl methacrylate, 1,4-butanediol diacrylate, 1,6-hexanediol diacrylate, 1,9-nonanediol diacrylate, neopentylglycol diacrylate, tripropyleneglycol diacrylate, tetraethyleneglycol diacrylate, trimethylolpropane triacrylate, tetramethylolmethane tetraacrylate, pentaerythritol triacrylate, trisacryloxyethyl phosphate, ditrimethylolpropane tetraacrylate, styrene, α-methylstyrene, vinyltoluene, divinylbenzene, acrylonitrile, methacrylonitrile, vinyl acetate, vinyl propionate, maleic acid, crotonic acid, itaconic acid, polybutadiene, linseed oil, soybean oil, epoxidized soybean oil, epoxidized polybutadiene, cyclohexenevinyl monoxide, divinylbenzene monoxide, and the like.

As a flake pigment, mica, surface colored mica, glass flake, surface colored glass flake, pearl, or the like may be used alone or in combination with the metal flake.

As an adhesive binder is preferably used as dissolved in a solvent, the binder preferably has such properties that it is completely dissolved in a solvent, has a low viscosity when dissolved in the solvent, and loses adhesiveness if the solvent is removed from the necessity of suppressing blocking.

An example of the adhesive binder having such a property includes a resin containing an oligomer as a main component which has the number-average molecular weight and the softening point both in a specific range.

Here, the number-average molecular weight is preferably not smaller than 300, and more preferably not smaller than 400. In addition, the number-average molecular weight is preferably not larger than 2000, and more preferably not larger than 1500. If the number-average molecular weight is less than 300, the binder becomes a liquid at a room temperature, and blocking takes place among bonded thermosetting powder coating resins, resulting in a defect. If the number-average molecular weight is over 2000, viscosity of the solution when the binder is dissolved in the solvent is increased, and uniform permeation and dispersion into the thermosetting powder coating resin to be subjected to bonding tends to be difficult.

The softening point described above is preferably not lower than 30˚C, and more preferably not lower than 80˚C. In addition, the softening point is preferably not higher than 180˚C, and more preferably not higher than 150˚C. If the softening point is lower than 30˚C, the binder exhibits adhesiveness at a room temperature, and blocking takes place among bonded thermosetting powder coating resins, resulting in a defect. If the softening point is over 180˚C, viscosity of the solution when the binder is dissolved in the solvent is increased as in the case of the number-average molecular weight, and uniform permeation and dispersion into the thermosetting powder coating resin to be subjected to bonding tends to be difficult.

Examples of the adhesive binder include an adhesive binder of a natural resin type such as a chromane/indene-type resin, a terpene-type resin, a terpene/phenol-type resin, an aromatic hydrocarbon denatured terpene-type resin, a rosin-type resin, a hydrogenated rosin ester-type resin, a rosin denatured phenol-type resin, and an alkylphenol-type resin; an adhesive binder of synthetic resin-type such as an alkylphenol/acetylene-type resin, an alkylphenol/formaldehyde-type resin, a styrene-type resin, an aliphatic petroleum resin, an alicyclic petroleum resin, a copolymer-type petroleum resin, an aromatic petroleum resin, a xylene-type resin, and a xylene/formaldehyde-type resin; an oligomer-type tackifier such as polybutene and liquid rubber; and the like. In addition, a variety of rubber materials, fat and oil, wax, and the like can be suitably used as an adhesive binder. Among others, a denatured rosin ester-type resin, a terpene-type hydrogenated-type resin, and a polyolefin-type resin are particularly suitable for use as an adhesive binder.

The thermosetting resin powder is broadly categorized as an acrylic resin type and a polyester resin type. Other than those two types, examples of the thermosetting resin powder include alkyd resin type, urea resin type, melamine resin type, phenol resin type, ebonite type, and the like. The polyester resin type includes a resin hardened by epoxy resin, a resin hardened by isocyanate (urethane type), and a resin hardened by primid (primid type). In the present invention, it is desirable to use at least one of these thermosetting resins.

A hardener or a dispersant may be added to the thermosetting resin powder, if necessary. The hardener is not particularly limited, and a known or commercially available hardener may be used. For example, amine, polyamide, dicyandiamine and its homologue, imidazole and its homologue, dihydrazide carboxylate, acid anhydride, polysulfide, boron trifluoride, amino resin, triglycidyl isocyanurate, trisepoxypropyl isocyanurate, primid, epoxy resin, other dibasic acid and its homologue, imidazoline and its homologue, hydrazide and its homologue, isocyanate compound, or the like is desirably used. An accelerator may concurrently be used, as required. The dispersant is not particularly limited, and a known or commercially available dispersant may be used. For example, a known surfactant such as phosphoric ester and its homologue, amine and its homologue, polyoxyethylene alkylether, polyoxyethylene alkylphenylether and its homologue, or the like is preferably used.

In addition, a variety of coloring agents such as quinacridon, diketopyrrolopyrrole, isoindolinone, indanthrone, perylene, perynone, anthraquinone, dioxazine, benzoimidazolone, triphenylmethane quinophthalone, anthrapyrimidine, chrome yellow, pearl mica, transparent pearl mica, colored mica, interference mica, phthalocyanine, phthalocyanine halide, azo pigment (azomethine metal complex, condensed azo etc.), titanium oxide, carbon black, iron oxide, copper phthalocyanine, condensed polycyclic, or the like may be contained in the thermosetting resin powder. When the coloring agent is contained, more bright-colored metallic coating film can be obtained. Though an amount of blending of the coloring agent is different depending on the type thereof, it is desirable to set the amount to be in such a range that a property of the flake pigment according to the present invention is made use of, and smoothness or reflection performance of the coating film surface is not deteriorated.

In addition, a variety of fillers such as bentonite, alumina white, calcium carbonate, barium sulfate, or talc; a variety of fluidity adjusters such as silica, alumina, or aluminum hydroxide; a variety of fluidizers such as acrylic oligomer or silicone; a variety of foaming preventing agents such as benzoin; or a variety of additives and functional materials including wax kind, coupling agent, antioxidant, magnetic powder, stabilizer, UV absorber, leveling agent, thickening agent, or precipitation preventing agent may be contained in the thermosetting resin powder, as required.

Though the average particle size of the thermosetting resin powder is not particularly limited, preferably, it is set normally to approximately 5 to 100$\mu$m, and more particularly to 15 to 60$\mu$m. If the average particle size is smaller than 5$\mu$m, it will be difficult to uniformly mix the resin powder with the pigment and aggregation tends to take place, whereby uniform pulverization may not be achieved in powder coating. If the average particle size is over 100$\mu$m, smoothness of the coating film surface is deteriorated, and excellent appearance may not be obtained.

The thermosetting resin powder is manufactured in the following manner. For example, first, material compositions such as a resin, a hardener, and a filler added as required are prepared and subjected to dry blending, using a mixer, a blender, or the like. After mixing, the materials are melted, and mixed and kneaded with a kneader, followed by cooling. Then, a mechanical or air crusher is used to crush the cooled, melted, mixed and kneaded substance, which is subsequently classified by an air classifier so as to obtain the thermosetting resin powder. Other than this method, a spray dry method or a polymerization method may be used to manufacture the thermosetting resin powder.

A method of adhering the flake pigment to the surface of the thermosetting resin powder obtained by the method described above using the adhesive binder is not particularly limited, and the following method may be employed, for example.

An adhesive binder dissolved in the solvent is added to the resin powder and the flake pigment uniformly mixed in advance, and then mixed and kneaded. Mixing and kneading is continued until the solvent evaporates and the entire mixture becomes powdery. After the solvent is completely removed, the mixture is classified by an air classifier (screen), so as to obtain a powder coating composition for metallic coating. By evaporating and removing the solvent for drying the mixture while mixing and kneading the same, adhesiveness between the flake pigment and the resin powder is enhanced, and blocking among the resin powders can be suppressed. It is to be noted that vacuuming is more preferable for drying the mixture by evaporating and removing the solvent.

In the step of mixing and kneading including drying, the mixture is kept at a temperature of not lower than -5˚C, and more preferably not lower than 0˚C. In addition, the mixture is kept at a temperature of not higher than 50˚C, and more preferably not higher than 35˚C. If the temperature exceeds 50˚C, adhesion among the thermosetting resin powders via the binder is promoted, leading to a possibility of occurrence of blocking. In such a case, though the aggregated particles can be separated with a physical crushing method such as jet mill, the flake pigment particles may peel off from the thermosetting resin powder and the particles themselves may be destroyed in such a process, which could lead to a result contrary to the original object. If the temperature is lower than -5˚C, it takes a long time for drying, which is not practical.

Though the step of uniformly mixing the flake pigment with the resin powder and the subsequent step of mixing and kneading as well as drying the adhesive binder can continuously be performed in an identical apparatus such as a vacuum kneader mixer, the step of uniform mixing and the step of mixing, kneading, and drying of the binder may be performed separately in order to improve productivity. In such a case, a high-speed mixer such as an atmospheric pressure kneader mixer, a two-axis screw type kneader mixer, a Henschel mixer, or a super mixer, or a blender may be used as a mixer. A vibration dryer, a continuous fluidized-bed dryer, or the like may be used as a kneader mixer and dryer.

A substance obtained by dispersing the flake pigment in the adhesive binder dissolved in the solvent in advance may be added to the resin powder, and the solvent may then be evaporated while mixing and stirring.

Though the solvent dissolving the adhesive binder is not particularly limited, the solvent should not dissolve or swell the resin powder, and desirably it has a low boiling point. In general, the thermosetting resin powder for powder coating melts at 50 to 80˚C, and accordingly, a solvent having low boiling point which can be distilled and removed at a temperature lower than the melting temperature of the thermosetting resin powder is preferable. In addition, a solvent which can completely be removed at a temperature in a range of -5 to 50˚C, which is a temperature preferable for mixing, kneading and drying under vacuum, and more preferably at a temperature in a range of 0 to 35˚C is particularly desirable.

As a solvent that meets this requirement, a solvent having a boiling point in a specific range under an atmospheric pressure is preferable. Here, the boiling point is preferably not lower than 28˚C, and more preferably not lower than 60˚C. In addition, the boiling point is preferably not higher than 130˚C, and more preferably not higher than 110˚C.

If the boiling point of the solvent is over 130˚C, drying at a temperature over 50˚C is necessary even under vacuum, and blocking among particles tends to occur. In contrast, if the boiling point of the solvent is lower than 28˚C, a flash point of the solvent will also be lowered, which is a problem in terms of safety.

Examples of such a solvent include alkane and its homologue such as pentane, hexane, heptane, and octane; isoparaffin and its homologue such as isopentane, isohexane, isoheptane, and isooctane; alcohol and its homologue such as methanol and ethanol; organic halide and its homologue such as carbon tetrachloride; and water.

The flake pigment mixed with the resin powder should be blended so as to normally attain approximately 1 to 40 parts by weight, in particular 2 to 20 parts by weight per 100 parts by weight of the resin powder. The flake pigment less than 1 part by weight may not be able to achieve sufficient metallic feel and brilliance. In addition, coating thickness should be large in order to cover the base member. If the flake pigment is blended by an amount over 40 parts by weight, the cost for manufacturing is increased and smoothness of the coating film is lost, resulting in poor appearance.

An amount of the adhesive binder to be added is preferably set to 0.1 to 5% with respect to the powder coating composition to be obtained. If the amount is set to less than 0.1%, sufficient adhesion is not established and a large amount of free flake pigment will remain. If the amount is over 5%, considerable blocking will take place.

Though an amount of the solvent dissolving the binder is not particularly limited, the amount is preferably set to 2 to 50% of mixed wet powder (resin powder + flake pigment + adhesive binder + solvent), and more preferably to 2 to 15% thereof. If the amount of the solvent is set to less than 2%, it is difficult to uniformly mix the binder solution with the entire resin powder and flake pigment. If the amount thereof is over 15%, blocking occurs to some extent. Further, if the amount is over 50%, fluid slurry is produced, which makes drying difficult.

As a method of applying the powder coating composition according to the present invention, the following process steps are preferable. That is, a blast treatment is performed on the coating surface in advance, and thereafter a known treatment such as conversion treatment is performed. Then, the powder coating composition is adhered, followed by heating and hardening.

Though a member to be coated (base member) is not particularly limited, a member which is not susceptible to deformation or quality change due to baking is preferable. For example, a known metal such as iron, copper, aluminum or titanium and a variety of alloys are preferable. Specifically, for example, the member is used for a car body, office products, housewares, sporting goods, building materials, electric appliances, and the like.

As a method of adhering the powder coating composition according to the present invention to the base member surface, fluidized-bed coating or electrostatic powder coating can be applied. Here, the electrostatic powder coating is more preferable because of its excellent coating and adhesion efficiency. A known method such as corona discharge or triboelectrification can be used as a method of electrostatic powder coating.

A heating temperature can be set as required in accordance with a type of the used thermosetting resin powder, and normally it is set to not lower than 120˚C, and more preferably to 150 to 230˚C. A heating time may be selected as required in accordance with the heating temperature, and generally, it is set to not shorter than one minute and preferably to 5 to 30 minutes. Though not limited, the coating film formed by heating normally has a thickness of approximately 20 to 100$\mu$m.

In the present invention, brightness of the coating film is evaluated by an evaluation parameter $\beta/\alpha$. In a case of a silver metallic coating film using aluminum flake as the flake pigment and not containing the coloring pigment or the like, it is desirable to attain $\beta/\alpha \geq 110$. This evaluation parameter $\beta/\alpha$ can be derived from Equation (1) in the following.

$$\text{Equation (1):} \quad L = [\beta / (\theta^2 + \alpha)] + \gamma$$

(where L represents a lightness index obtained by colorimetry at an observation angle $\theta$ using a spectrophotometer ("X-Rite MA68" manufactured by X-Rite) (L*a*b colorimetry system (a colorimetric system based on uniform color space defined by CIE in 1976); $\theta$ represents an observation angle; and $\alpha$, $\beta$ and $\gamma$ are constants.) The first term in Equation (1) corresponds to directional scattering specific to metallic dependent on observation angle 0, and the second term corresponds to isotropic scattering not dependent on observation angle $\theta$. As visual brightness correlates well to an L value at a position of regular reflection ($\theta=0$) of directional scattering, that is, to $\beta/\alpha$, $\beta/\alpha$ is used as the evaluation parameter of the brightness.

In calculating β/α, α, β and γ should initially be determined. In the present invention, first, L values actually measured at observation angles θ of 15, 25, 45, 75 and 110 degrees are found respectively. Then, assuming that a relation between θ and the L value is in accordance with Equation (1), α, β and γ are determined with a method of least squares.

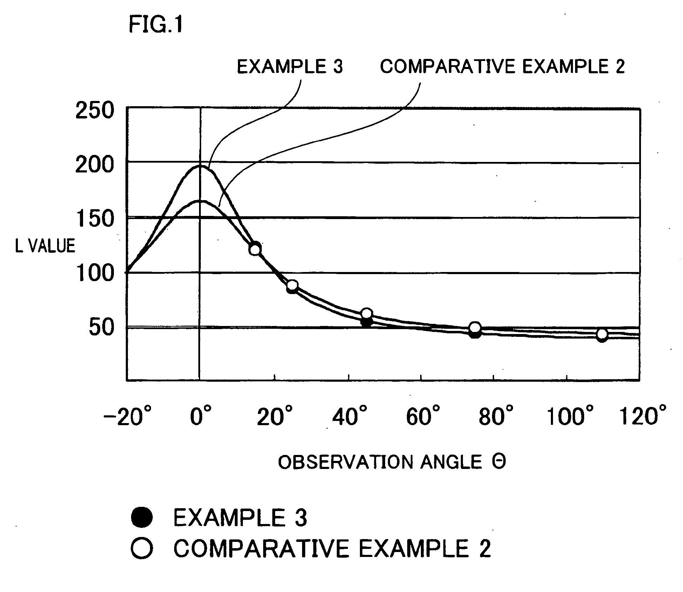

A result of measurement of the L value as described above with respect to the coating film in Example 3 and Comparative Example 2 described later will be described with reference to Fig. 1. As shown in Fig. 1, α, β and γ are found such that the actually measured value is found as closely as possible to a curve drawn according to Equation (1). For this purpose, an operation in the following is performed. That is, the mantissa is substituted into α, β and γ, and solutions for α, β and γ minimizing residual sum of squares of a calculated value and the actually measured L value are determined by a solver.

In the following, examples and comparative examples of the present invention will be shown, so as to further clarify the feature of the present invention. It is to be noted that the present invention is not limited to the scope described in the examples.

Example 1

An amount of 665g of aluminum powder for powder coating (PCF7640, D50=19μm: D50 represents the average particle size, which value was obtained in the following manner: a substance obtained by dispersing approximately 0.1g of a sample in 5g of 0.5% Triton X (a surfactant manufactured by UNION CARBIDE) solution was dropped in Microtrac 9320 X-200 manufactured by Honeywell using water as a solvent, which was dispersed with ultrasound (40W, 10 seconds); and thereafter the particle size was measured.) manufactured by Toyo Aluminum K.K. was introduced in an inverted cone shaped ribbon mixer (RM-10VD manufactured by Okawara MFG. Co., Ltd.) of a capacity of 10L with a vacuuming function and a heating and drying function, to which 7000g of polyester-type resin powder (Teodur PE 785-900 manufactured by Kuboko Paint Co., Ltd., D50=approximately 49μm) was added. Then, the mixture was stirred and mixed for 10 minutes.

Then, a binder solution was obtained by dissolving 105g of a terpene-type hydrogenated resin (Clearon P-105, having the number-average molecular weight of 650 and the softening point of 105˚C manufactured by Yasuhara Chemical Co., Ltd.) as an adhesive binder in 350g of heptane (boiling point at 98.4˚C). The binder solution was added to the mixture of the aluminum powder and the resin powder described above, and stirred for 20 minutes, so as to achieve a uniform wet powder state. Thereafter, while maintaining the temperature of the mixture at 20˚C, vacuum drying was performed for 30 minutes. Obtained resin powder was made to pass through a 100μm screen, and bonded aluminum of 7600g was obtained.

Example 2

An amount of 8.6g of aluminum powder for powder coating (PCF1401, D50=60μm) manufactured by Toyo Aluminum K.K. was mixed well with 108.3g of polyester-type resin powder (Teodur PE 785-900 manufactured by Kuboko Paint Co., Ltd, D50=approximately 49μm) in a 1 liter PP cup.

Then, a binder solution was obtained by dissolving 3.1g of a terpene-type hydrogenated-type resin (Clearon P-105, having the number-average molecular weight of 650 and the softening point of 105˚C manufactured by Yasuhara Chemical Co., Ltd.) as an adhesive binder in 31.3g of heptane. The binder solution was added to the mixture of the aluminum powder and the resin powder, and heated in a water bath at 40˚C from time to time concurrently with mixing and stirring well, so as to evaporate heptane. When the wet powder becomes powdery, it is transferred into an eggplant-shaped flask where it is dried at 40˚C under vacuum for 20 minutes with a rotary evaporator, so as to completely evaporate heptane. Obtained resin powder was made to pass through a 100μm screen, and bonded aluminum of 113.6g was obtained.

Example 3

Bonded aluminum was obtained with a procedure the same as in Example 2, using aluminum powder for powder coating manufactured by Toyo Aluminum K.K. (PCF1440A, D50=34μm).

Example 4

Bonded aluminum was obtained with a procedure the same as in Example 2, using aluminum powder for powder coating manufactured by Toyo Aluminum K.K. (PCF7640A, D50=19μm).

Example 5

Heptane was substituted for a solvent portion in Alpaste manufactured by Toyo Aluminum K.K. (0670TS, D50=4$\mu$m), and a paste containing non-volatile component of 66.8% was prepared. An amount of 1.8g of an adhesive binder (P-105) was dissolved in 13.4g of heptane so as to obtain a binder solution, into which 2.7g of the prepared paste was dispersed. Aluminum dispersion liquid was added to 116.4g of resin powder (Teodur PE 785-900) and mixed well. The mixture was dried with a procedure the same as in Example 1, and made to pass the screen. Thus, 113.4g of bonded aluminum was obtained. Here, the yield was 94.5%. Comparative Example 6 Bonded aluminum was obtained with a procedure the same as in Example 4, except for use of an isoparaffin solvent (Isosol300 manufactured by Nippon Petrochemicals Co., Ltd.) having a boiling point in a range of 173 to 189˚C as a solvent dissolving a binder.

Table 1 shows composition blending and yield (%) in Examples 1 to 5 and Comparative Example 6. Here, the yield (%) refers to an amount of bonded aluminum (weight %) that passed through the screen with respect to the total prepared amount (solid portion). Here, it is shown that, the higher the yield is, the lower a degree of blocking (adhesion) among resin powders is, which means excellent.

Table 1 Amount of Blending and the like in Fabricating Bonded Aluminum in Examples 1 to 5 and Comparative Example 6

| | | Example 1 | Example 2 | Example 3 | Example 4 | Example 5 | Comparative Example 6 |
|---|---|---|---|---|---|---|---|
| Aluminum Flake | Type | PCF7640 | PCF1401 | PCF1440A | PCF7640 | 0670TS | PCF7640 |
| | D50 ($\mu$m) | 19 | 60 | 34 | 19 | 4 | 19 |
| | Prepared Amount (g) | 665 | 8.6 | 10. 2 | 10.2 | 2.7 | 10.2 |
| Resin Powder | Resin Type | polyester | polyester | polyester | polyester | polyester | polyester |
| | Prepared Amount (g) | 7000 | 108.3 | 106.8 | 107.4 | 116.4 | 107.4 |
| Tackifier | Type | P-105 | P-105 | P-105 | P-105 | P-105 | P-105 |
| | Prepared Amount (g) | 105 | 3.1 | 3 | 2.4 | 1.8 | 2.4 |
| Solvent | Type | heptane | heptane | heptane | heptane | heptane | Isoso|300 |
| | Prepared Amount (g) | 350 | 31. 3 | 51.8 | 51.4 | 13.4 | 51.4 |
| Yield(%) | | 97.8 | 94. 7 | 93. 1 | 90.0 | 94.5 | 79.0 |

Comparative Example 1

Heptane was added to aluminum powder (PCF1401) to obtain a paste (containing non-volatile component of 90%). One kilogram of alumina ball having $\phi$ 2mm was filled in a drum having an inner diameter of 140mm and a length of 160mm, to which 8.5g of the prepared paste was added. Then, the drum was rotated for 10 minutes at 75rpm, so as to adhere the aluminum paste to the surface of alumina ball. One hundred grams of resin powder (Teodur PE 785-900) was further added, and the drum was rotated for further 30 minutes, so as to press and transfer the aluminum flake onto the surface of the resin powder. Then, the ball and the resin powder were separated through a screen, and the coating was transferred into the eggplant-shaped flask. The coating was dried for 20 minutes at a temperature of 40˚C under vacuum with the rotary evaporator, so as to completely evaporate heptane. Obtained resin powder was made to pass through the 100$\mu$m screen, and bonded aluminum of 96.6g was obtained.

Comparative Example 2

Bonded aluminum was obtained with a procedure the same as in Comparative Example 1, using aluminum powder (PCF1440A).

Comparative Example 3

Bonded aluminum was obtained with a procedure the same as in Comparative Example 1, using aluminum powder (PCF7640).

Comparative Example 4

Heptane was substituted for a solvent portion in Alpaste manufactured by Toyo Aluminum K.K. (0670TS, D50=4μm), and a paste containing non-volatile component of 66.8% was prepared. Bonded aluminum was obtained in a manner the same as in Comparative Example 1.
Table 2 shows composition blending and yield (%) in Comparative Examples 1 to 4.

Table 2 Amount of Blending and the like in Fabricating Bonded Aluminum in Comparative Examples 1 to 4

| | | Comparative Example 1 | Comparative Example 2 | Comparative Example 3 | Comparative Example 4 |
|---|---|---|---|---|---|
| Aluminum Flake | Type | PCF1401 | PCF1440A | PCF7640 | 0670TS |
| | D50(μm) | 60 | 34 | 19 | 4 |
| | Non-volatile component (%) | 89.5 | 89.8 | 89.2 | 66.8 |
| | Prepared Amount (g) | 8.5 | 10.2 | 10.4 | 2.3 |
| Resin Powder | Resin type | polyester | polyester | polyester | polyester |
| | Prepared Amount (g) | 100 | 100 | 100 | 100 |
| Yield (%) | | 89. 7 | 85.3 | 92.7 | 90.3 |

Though a conventional pressing and adhering method described in the comparative examples causes relatively less blocking, blocking is suppressed to a level similar to or lower than in the conventional example, also in the present invention using an adhesive binder.

Evaluation Result

In the following, an effect of the present invention will be shown. Here, Table 3 shows in summary an analysis result of aluminum content (weight %) in the bonded aluminum in each example and in combinations of Example and Comparative Example to be compared.

Table 3 Analysis Result of Aluminum Content

| D50(μm) of Aluminum Flake | Example | Aluminum Content (%) | Comparative Example | Aluminum Content (%) |
|---|---|---|---|---|
| 19 | Example 1 | 7.4 | | |
| 60 | Example 2 | 6.4 | Comparative Example 1 | 6.6 |
| 34 | Example 3 | 6.5 | Comparative Example 2 | 6.9 |
| 19 | Example 4 | 7.3 | Comparative Example 3 | 7.5 |
| 4 | Example 5 | 1.5 | Comparative Example 4 | 1.5 |
| 19 | | | Comparative Example 6 | 7.5 |

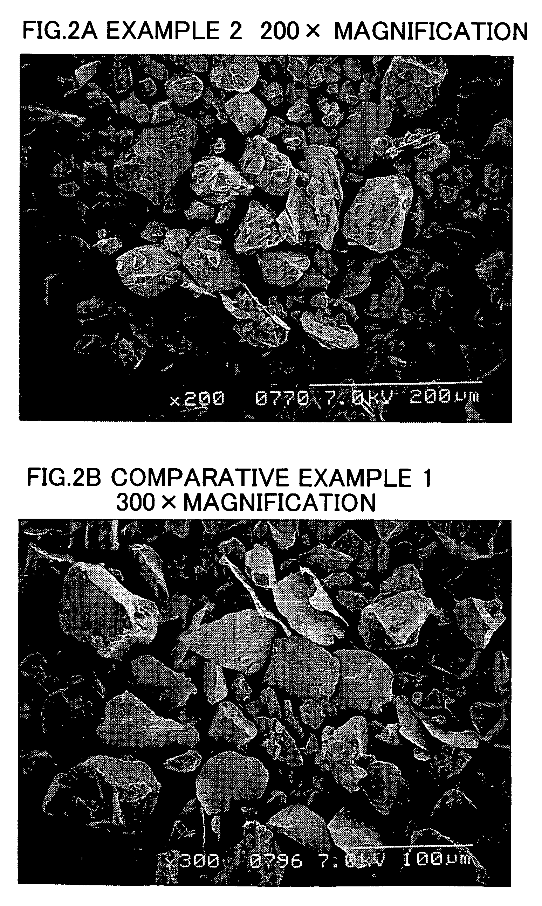

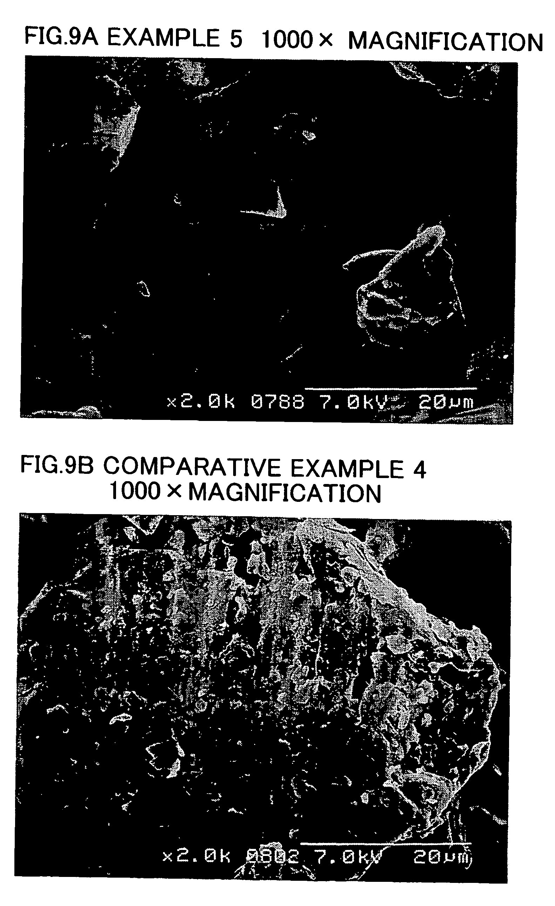

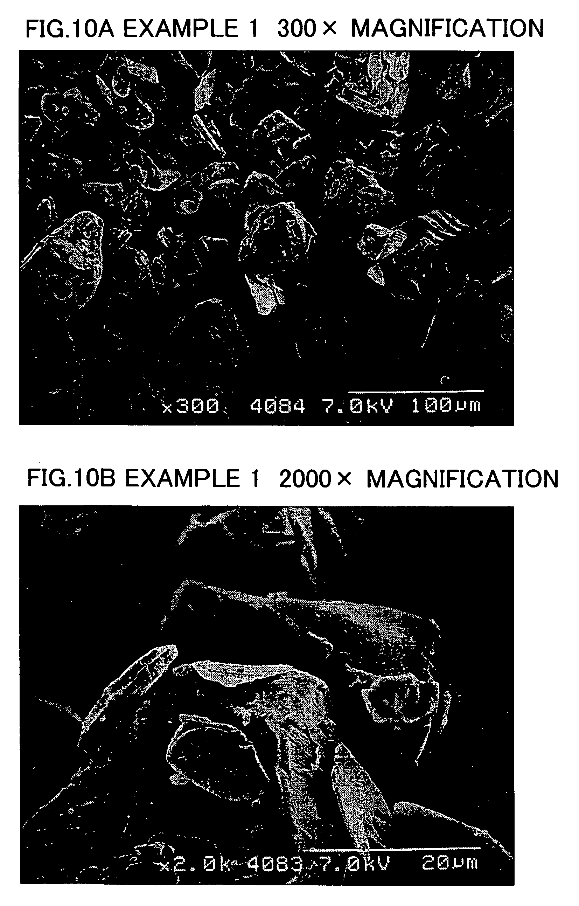

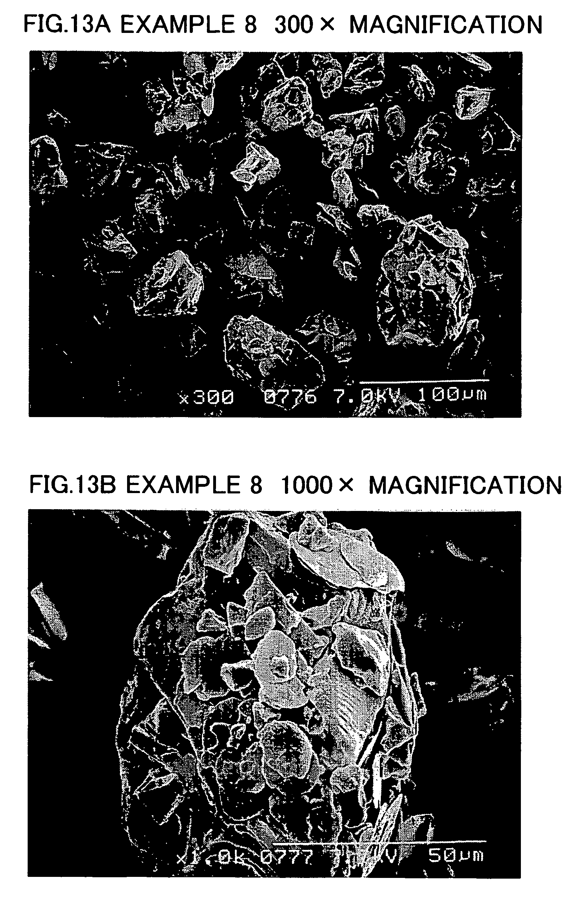

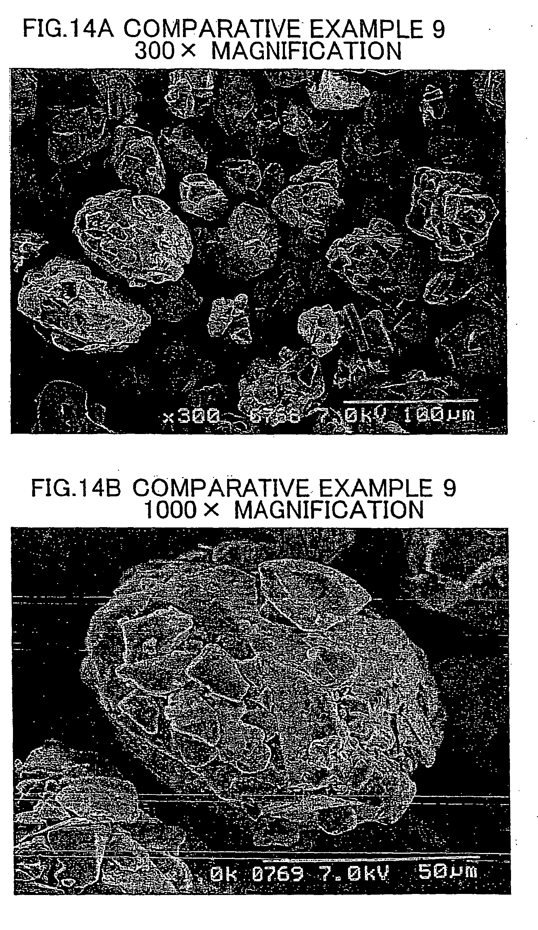

Figs. 2A and 2B through Figs. 9A and 9B show electron micrographs (magnification of 200 to 300 times and 1000 times) of bonded aluminum samples in (Example 2 and Comparative Example 1) through (Example 5 and Comparative Example 4) respectively, while Figs. 10A and 10B through Figs. 14A and 14B show electron micrographs (magnification of 300 times and 1000 to 2000 times) of bonded aluminum samples in Example 1 and Comparative Example 6 as well as Examples 7, 8 and Comparative Example 9 respectively.

In general, as the flake pigment has a larger particle size, adhesion between the flake pigment and the resin powder tends to be made difficult. On the other hand, in the present invention, as can clearly be seen from the micrographs in Figs. 2A and 2B through Figs. 14A and 14B, the aluminum flake and the resin powder substantially establish adhesion regardless of the particle size of the aluminum flake. Free aluminum flake as shown in the comparative examples with the conventional pressing and adhering method was hardly observed.

In respective micrographs, a substance that looks like a lump is the resin powder, and a substance that looks like a scale is the aluminum flake. Among the aluminum flakes, those which look apart from the resin powder are the free aluminum flakes.

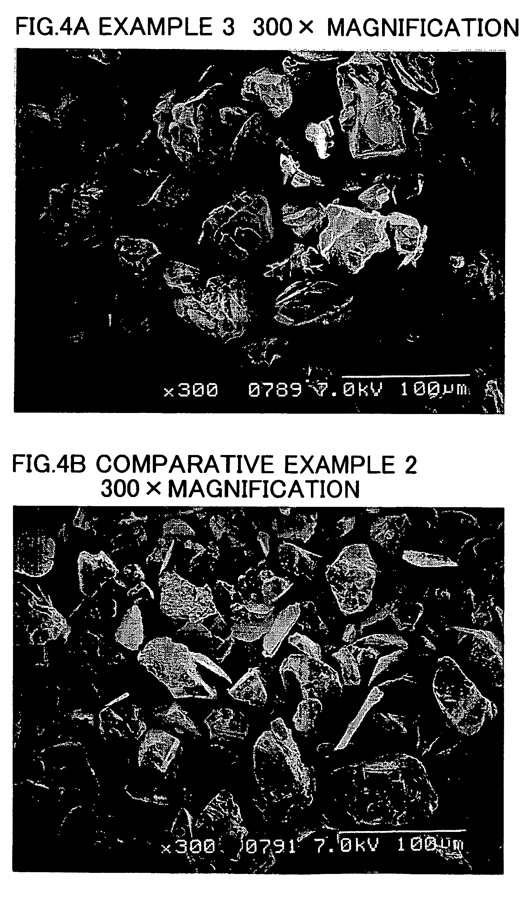

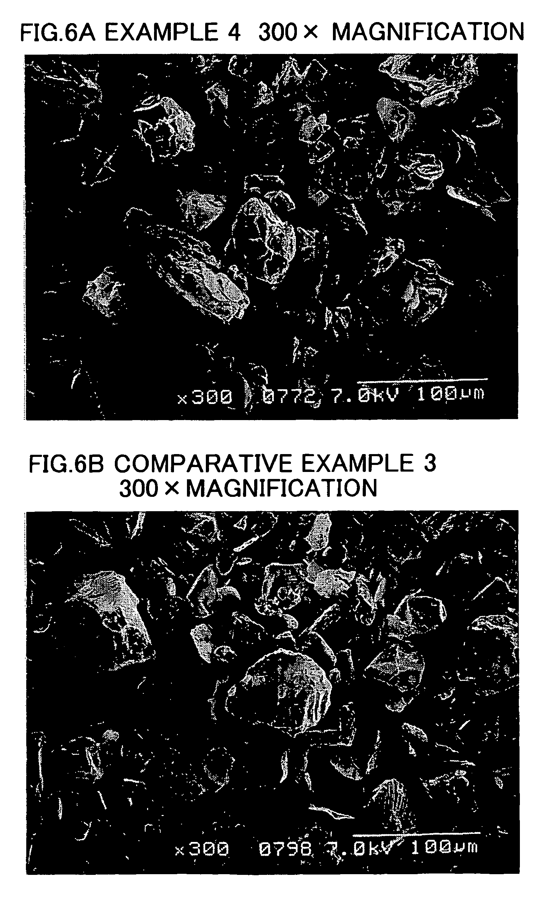

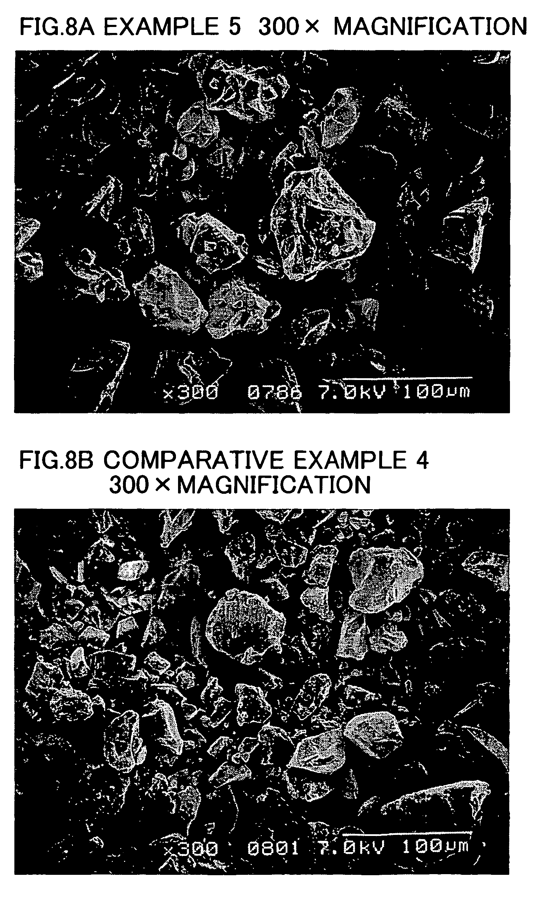

When the micrographs in Figs. 2A and 4A are compared with those in Figs. 6A and 8A, it can be found to some extent also in the present invention that adhesion between the aluminum flake and the resin powder tends to be made difficult as the particle size becomes larger.

On the other hand, when the micrograph in Fig. 2A is compared with that in Fig. 2B and the micrograph in Fig. 4A is compared with that in Fig. 4B respectively, there are extremely few free aluminum flake pigments found in the present invention even if the aluminum flake has a large particle size. Thus, the present invention is clearly different from the conventional method.

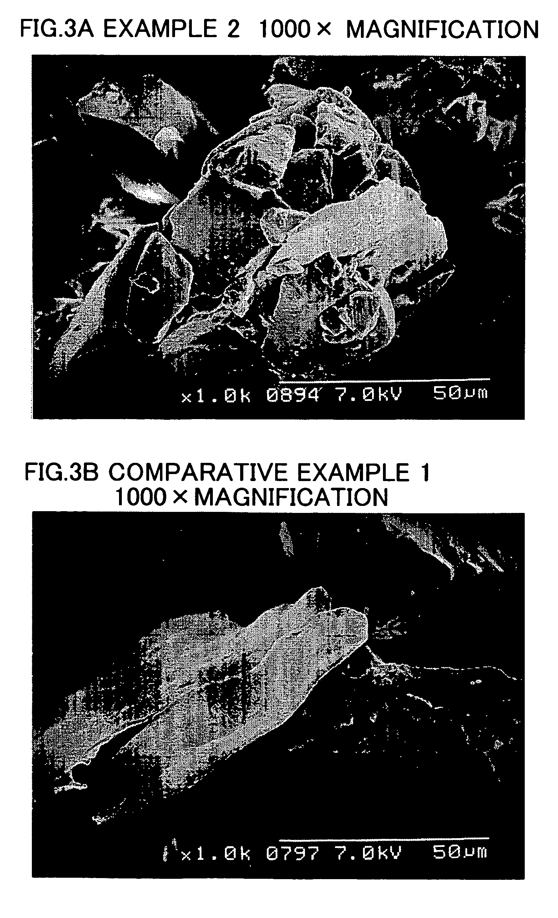

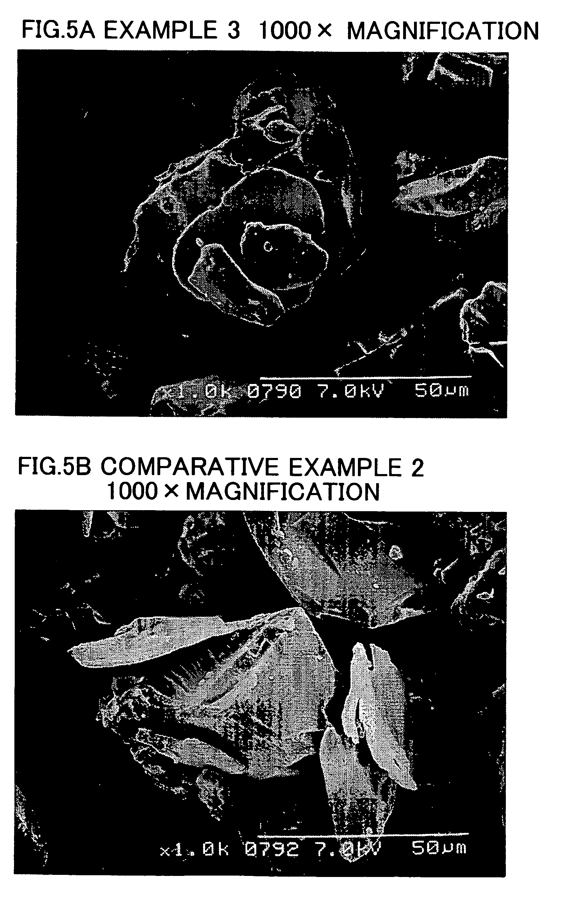

In addition, when the micrograph in Fig. 3A is compared with that in Fig. 3B and the micrograph in Fig. 5A is compared with that in Fig. 5B respectively, it can be found that adhesion of the aluminum flake according to the present invention to the resin powder is significantly stronger than in the example using conventional method, if the aluminum flake pigment has a large particle size.

Further, when the micrograph in Fig. 6A is compared with that in Fig. 6B and the micrograph in Fig. 8A is compared with that in Fig. 8B respectively, it is found that free aluminum flake is not observed also in the example using the conventional pressing and adhering method if the aluminum flake has an extremely small particle size.

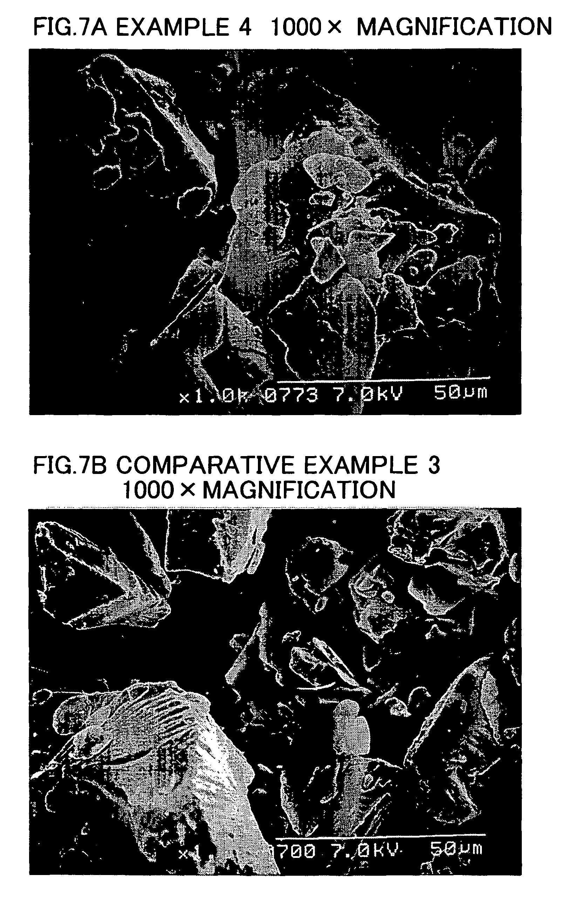

On the other hand, as can be seen when the micrograph in Fig. 7A is compared with that in Fig. 7B and the micrograph in Fig. 9A is compared with that in Fig. 9B respectively, in an enlarged view of the surface, the aluminum flake tightly contacts with the resin powder surface and establishes strong adhesion thereto in the present invention. Therefore, it can be seen that adhesion of the aluminum flake according to the present invention to the resin powder is stronger than in the example using the conventional method, even if the aluminum flake pigment has an extremely small particle size.

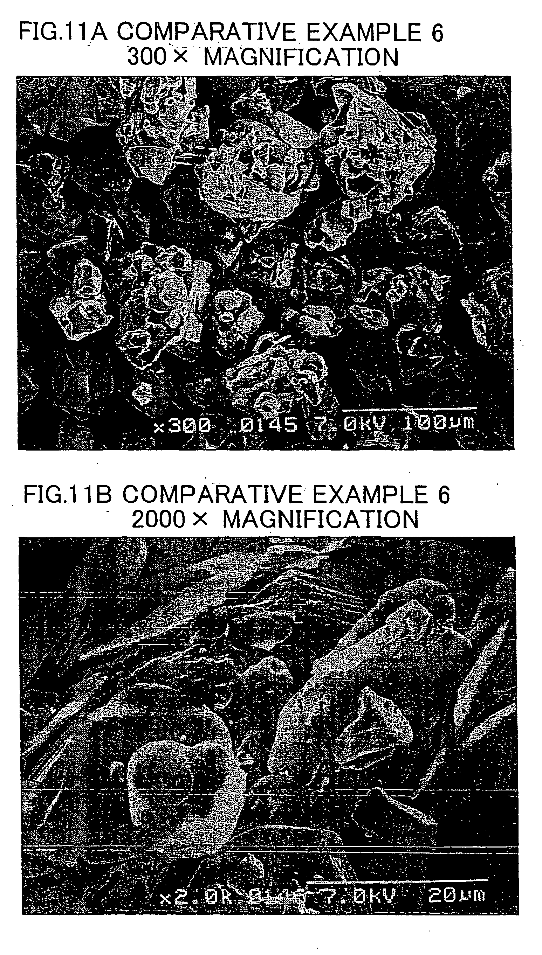

In the micrographs in Figs. 11A and 11B showing Comparative Example 6 using a solvent with a high boiling point, it is observed that blocking took place to some extent, though adhesion of the aluminum flake is strong.

Observation results with an electron microscope are summarized in Tables 4 and 5. A scanning electron microscope (SEM) is used to observe 10 or more fields of view for each Example and Comparative Example, and Table 4 shows results by denoting an example where free aluminum flake was hardly observed by ◎, an example where some free aluminum flakes were observed by ○, an example where considerable free aluminum flakes were observed by Δ, and an example where a very large amount of free aluminum flakes were observed by x.

Table 5 shows in summary blocking states of the aluminum flake and the resin powder, by denoting an example where blocking was hardly observed by ◎, an example where blocking was observed to some extent by ○, an example where blocking was observed to a large extent by Δ, and an example where blocking was observed to an extremely large extent by x.

Table 4 Comparison Result of Adhesion State Between Aluminum Flake and Resin Powder

| D50 ($\mu$m) of Aluminum Flake | Example | Result of observation by Electron Microscope | Comparative Example | Result of observation by Electron Microscope |
|---|---|---|---|---|
| 19 | Example 1 | ◎ | | |
| 60 | Example 2 | ○ | Comparative Example 1 | × |
| 34 | Example 3 | ◎ | Comparative Example 2 | × |

(continued)

| D50 (μm) of Aluminum Flake | Example | Result of observation by Electron Microscope | Comparative Example | Result of observation by Electron Microscope |
|---|---|---|---|---|
| 19 | Example 4 | ◎ | Comparative Example 3 | Δ |
| 4 | Example 5 | ◎ | Comparative Example 4 | ◎ |
| 19 | | | Comparative Example 6 | ◎ |

Table 5 Comparison Result of Blocking State of Aluminum Flake and Resin Powder

| D50(μm) of Aluminum Flake | Example | Result of observation by Electron Microscope | Comparative Example | Result of observation by Electron Microscope |
|---|---|---|---|---|
| 19 | Example 1 | ◎ | | |
| 60 | Example 2 | ○ | Comparative Example 1 | ○ |
| 34 | Example 3 | ◎ | Comparative Example 2 | ◎ |
| 19 | Example 4 | ◎ | Comparative Example 3 | ◎ |
| 4 | Example 5 | ◎ | Comparative Example 4 | ◎ |
| 19 | | | Comparative Example 6 | Δ |

According to Table 3, the samples to be compared contain substantially the same amount of aluminum. Therefore, comparison of properties of the coating film in the following can be regarded as comparison of effects of the present invention.

Bonded aluminum in Examples 1 to 5 and Comparative Examples 6 and 1 to 4 was applied using a corona discharge type electrostatic powder coating machine ("MXR-100VT-mini" manufactured by Matsuo Sangyo Co., Ltd) under an applied voltage of 80kV. After baking for 20 minutes at 190˚C, a coated plate was fabricated. Table 6 shows brightness $\beta/\alpha$ of the coating film, while Table 7 shows a feel that glittering particles in the coating film are observed (particle feel: sensory evaluation by visual observation). The results were obtained through visually observing each Example and Comparative Example, and summarized by denoting an example where particle feel was very strong by ◎, an example where particle feel was strong by O, an example where particle feel was weak by Δ, and an example where particle feel was hardly observed by x.

Table 6 Comparison Result of Brightness of Coated Plate ($\beta/\alpha$)

| D50(μm) of Aluminum Flake | Example | Brightness | Comparative Example | Brightness |
|---|---|---|---|---|
| 19 | Example 1 | 149.3 | | |
| 60 | Example 2 | 120.1 | Comparative Example 1 | 60.4 |
| 34 | Example 3 | 160.1 | Comparative Example 2 | 124.2 |
| 19 | Examples 4 | 148.8 | Comparative Example 3 | 127.2 |
| 4 | Example 5 | 190.4 | Comparative Example 4 | 124.8 |
| 19 | | | Comparative Example 6 | 135.2 |

Table 7 Comparison Example of Particle Feel of Coated Plate

| D50($\mu$m) of Aluminum Flake | Example | Visual Sensory Evaluation | Comparative Example | Visual Sensory Evaluation |
|---|---|---|---|---|
| 19 | Example 1 | Δ | | |
| 60 | Example 2 | ◎ | Comparative Example 1 | ○ |
| 34 | Example 3 | ◎ | Comparative Example 2 | ○ |
| 19 | Example 4 | Δ | Comparative Example 3 | × |
| 4 | Example 5 | × | Comparative Example 4 | × |
| 19 | | | Comparative Example 6 | Δ |

As can be seen from Tables 6 and 7, the plate coated with bonded aluminum manufactured according to the present invention have higher brightness and particle feel. Here, particle feel could not be observed in the example of D50=4$\mu$m among Examples in Table 7. This is because the particle size was small and not because adhesion between the resin powder and the aluminum flake pigment was incomplete.

Example 7

Bonded aluminum was obtained with blending and procedure the same as in Example 4, except for using acrylic-type resin powder (Teodur AC793-N manufactured by Kuboko Paint Co., Ltd.) as the resin powder. The yield was 83.9%.

Example 8

Bonded aluminum was obtained with blending and procedure the same as in Example 4, except for using an aliphatic saturated hydrocarbon resin (Arkon M-100, having the number-average molecular weight of 600 and the softening point of 100˚C manufactured by Arakawa Chemical Industries, Ltd.) as an adhesive binder. The yield was 91.5%.

Comparative Example 9

An amount of 1.9g of polyvinyl alcohol (having saponification ratio of 80%, degree of polymerization of 2000, and the number-average molecular weight of 80000) was dissolved in 30.0g of water so as to obtain a binder solution. After 9.5g of aluminum powder (PCF7640) was mixed well with 108.8g of resin powder (Teodur PE785-900), the prepared binder solution was added, which was dried with a procedure the same as in Example 2, so as to obtain bonded aluminum. The yield was 79.3%.

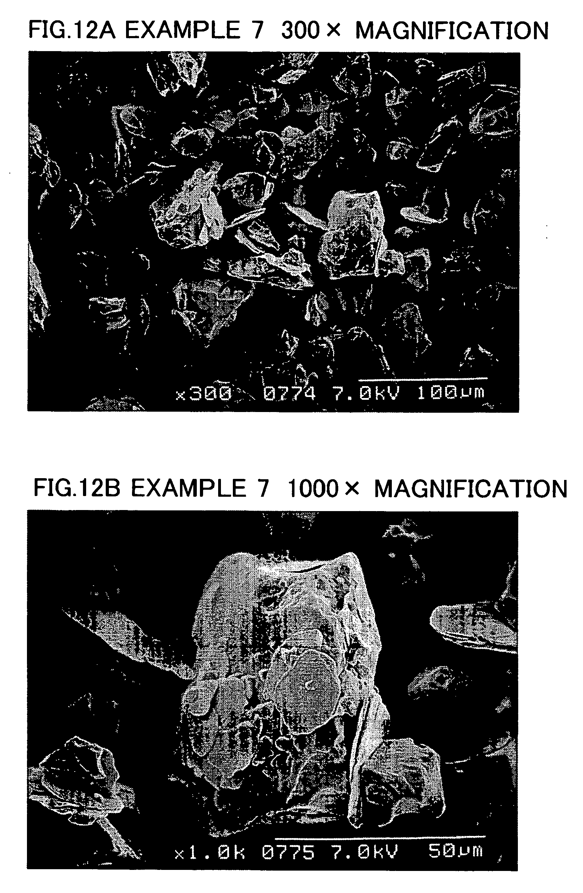

Micrographs shown in Figs. 12A to 14B show results of observation of bonded aluminum obtained in Examples 7, 8 and Comparative Example 9 using the electron microscope. No free aluminum flake pigment was observed in micrographs in Figs. 12A, 13A and 14A. In addition, substantially complete adhesion of the aluminum flake pigment to the resin powder was observed in all samples also in micrographs in Figs. 12B, 13B and 14B. As described above, it can be seen that an effect of the present invention can be achieved almost without limited by a type of an adhesive binder, a type of resin powder or a type of a solvent.

Although the present invention has been described and illustrated in detail, it is clearly understood that the same is by way of illustration and example only and is not to be taken by way of limitation, the spirit and scope of the present invention being limited only by the terms of the appended claims.

Industrial Applicability

As can be seen from Examples above, according to the present invention, the flake pigment is reliably adhered to the resin powder surface using an adhesive binder without applying a strong external force. Therefore, a powder coating composition with a stable quality and not susceptible to deformation of the flake pigment and deterioration in the color tone can be obtained. In addition, when the powder coating composition according to the present invention is used for coating, a coating film excellent in surface smoothness, metallic feel, brilliance, brightness and the like can be obtained.

Moreover, the powder coating composition according to the present invention does not cause a separation phenomenon between the resin powder and the flake pigment during coating. Therefore, deterioration in design performance of the coating film can be avoided, and excellent recyclability is achieved.

Furthermore, the powder coating composition according to the present invention is manufactured in the step of crushing the thermosetting resin before the aluminum flake is contained, and in the step of removing the solvent under a reduced pressure. Therefore, possibility of ignition or dust explosion during the manufacturing step is low. In addition, adhesion between the aluminum flake and the thermosetting resin powder is strong, and possibility of ignition or dust explosion during a coating operation is low, thereby offering superior security.

**Claims**

1. A powder coating composition containing thermosetting resin powder having a surface adhered to a flake pigment using an adhesive binder; **characterized in that**
   said adhesive binder is a resin dissolved in a solvent which does not dissolve said thermosetting resin;
   said solvent which does not dissolve said thermosetting resin has a boiling point in a range of 28 to 130˚C under an atmospheric pressure; and
   said adhesive binder is an oligomer having a number-average molecular weight in a range of 300 to 2000 and having a softening point in a range of 30 to 180˚C.

2. The powder coating composition according to claim 1, wherein said flake pigment is an aluminum flake.

3. The powder coating composition according to claim 2, **characterized in that**
   said aluminum flake has an average particle size in a range of 1 to 100μm.

4. A coating film obtained by powder-coating a base member with the powder coating composition according to any one of claims 1 to 3 followed by thermosetting.

5. A method of manufacturing a powder coating composition, comprising the steps of:

   mixing and kneading a flake pigment, thermosetting resin powder, a solvent which does not dissolve the thermosetting resin, and an adhesive binder, and
   wetting a resultant substance obtained by the mixing and kneading step, followed by drying the wet substance while continuing to mix and knead the same.

6. The method of manufacturing a powder coating composition according to claim 5, **characterized in that**
   said substance is kept in a temperature range of -5 to 50˚C while it is mixed and kneaded and then dried.

7. The method of manufacturing a powder coating composition according to claim 5 or 6, **characterized in that**
   the step of drying is performed by vacuuming.

8. The powder coating composition according to claim 1 **characterized in that**
   said adhesive binder is of at least one type selected from a group consisting of a terpene-type resin, a terpene/phenol-type resin, and a terpene-type hydrogenated-type resin.

9. A powder coating composition obtained by a manufacturing method thereof including the steps of mixing and kneading a flake pigment, thermosetting resin powder, a solvent which does not dissolve the thermosetting resin, and an adhesive binder, and wetting a resultant substance obtained by the mixing and kneading step, followed by drying the wet substance while continuing to mix and knead the same; **characterized in that**
   said powder coating composition contains thermosetting resin powder having a surface adhered to a flake pigment using an adhesive binder;
   said adhesive binder is a resin dissolved in a solvent which does not dissolve said thermosetting resin;
   said solvent which does not dissolve said thermosetting resin has a boiling point in a range of 28 to 130˚C under an atmospheric pressure; and
   said adhesive binder is an oligomer having a number-average molecular weight in a range of 300 to 2000 and having a softening point in a range of 30 to 180˚C.

10. The powder coating composition according to claim 9, wherein
said flake pigment is an aluminum flake.

11. The powder coating composition according to claim 10, **characterized in that**
said aluminum flake has an average particle size in a range of 1 to 100μm.

**Patentansprüche**

1. Pulverlackzusammensetzung, enthaltend wärmeaushärtendes Harzpulver mit einer Oberfläche, die an einem Schuppenpigment bei Verwendung eines Klebebinders anhaftet,
**dadurch gekennzeichnet, dass**
der Klebebinder ein Harz ist, das in einem Lösungsmittel, welches das wärmeaushärtende Harz nicht auflöst, aufgelöst ist;
wobei das Lösungsmittel, welches das wärmeaushärtende Harz nicht auflöst, einen Siedepunkt in einem Bereich von 28 bis 130˚C bei normalem Luftdruck aufweist; und
der Klebebinder ein Oligomer ist, das ein durchschnittliches Molekulargewicht in einem Bereich von 300 bis 2000 und ein Erweichungspunkt in einem Bereich von 30 bis 180˚C aufweist.

2. Pulverlackzusammensetzung gemäß Anspruch 1, **dadurch gekennzeichnet, dass** das Schuppenpigment eine Aluminiumschuppe ist.

3. Pulverlackzusammensetzung gemäß Anspruch 2, **dadurch gekennzeichnet, dass** die Aluminiumschuppe eine durchschnittliche Teilchengröße in einem Bereich von 1 bis 100 μm aufweist.

4. Beschichtungsfilm, der durch die Pulverbeschichtung eines Grundkörpers mit der Pulverlackzusammensetzung gemäß einem der Ansprüche 1 bis 3 und durch die nachfolgende Wärmeaushärtung erhalten ist.

5. Verfahren zur Herstellung einer Pulverlackzusammensetzung, umfassend die Schritte von:

Mischen und Kneten eines Schuppenpigments, eines aushärtenden Harzpulvers, eines Lösungsmittels, welches das wärmeaushärtende Harz nicht auflöst, und eines Klebebinders, und
Befeuchtung eines infolge des Schrittes des Mischens und Knetens resultierenden Stoffes und nachfolgendes Trocknen des nassen Stoffes bei Fortführung von Mischen und Kneten des Stoffes.

6. Verfahren zur Herstellung einer Pulverlackzusammensetzung gemäß Anspruch 5, **dadurch gekennzeichnet, dass** der Stoff in einem Temperaturbereich von -5 bis 50˚C gehalten wird, während er gemischt und geknetet und danach getrocknet wird.

7. Verfahren zur Herstellung einer Pulverlackzusammensetzung gemäß der Ansprüche 5 oder 6, **dadurch gekennzeichnet, dass** der Trockenschritt durch Absaugen durchgeführt ist.

8. Pulverlackzusammensetzung gemäß Anspruch 1, **dadurch gekennzeichnet, dass** der Klebebinder von zumindest einer Sorte ist, die aus einer Gruppe, die aus einem Terpenharz, einem Terpen-Phenolharz und aus einem hydrierten Terpenharz besteht, ausgewählt ist.

9. Pulverlackzusammensetzung erhalten in einem Herstellungsverfahren aufweisend die Schritte von Mixen und Kneten eines Schuppenpigments, eines wärmeaushärtenden Harzpulvers, eines Lösungsmittels, welches das wärmeaushärtende Harz nicht auflöst, und eines Klebebinders, und Befeuchtung eines infolge des Mischens- und Knetensschrittes resultierenden Stoffes und nachfolgendem Trocknen des nassen Stoffes bei Fortführung von Mischen und Kneten des Stoffes,
**dadurch gekennzeichnet,**
**dass** die Pulverlackzusammensetzung wärmeaushärtendes Harzpulver enthält, das eine Oberfläche aufweist, die an einem Schuppenpigment bei Verwendung eines Klebebinders anhaftet;
wobei der Klebebinder ein Harz ist, das in einem Lösungsmittel, welches das wärmeaushärtende Harz nicht auflöst, aufgelöst ist;

wobei das Lösungsmittel, welches das wärmeaushärtende Harz nicht auflöst, einen Siedepunkt in einem Bereich von 28 bis 130 ˚C bei normalem Luftdruck aufweist, und
der Klebebinder ein Oligomer ist, das ein durchschnittliches Molekulargewicht in einem Bereich von 300 bis 2000 und einen Erweichungspunkt in einem Bereich von 30 bis 180˚C aufweist.

10. Pulverlackzusammensetzung gemäß Anspruch 9, **dadurch gekennzeichnet, dass** das Schuppenpigment eine Aluminiumschuppe ist.

11. Pulverlackzusammensetzung gemäß Anspruch 10, **dadurch gekennzeichnet, dass** die Aluminiumschuppe eine durchschnittliche Teilchengröße in einem Bereich von 1 bis 100 μm aufweist.

**Revendications**

1. Composition de revêtement en poudre contenant une poudre de résine thermodurcissable ayant une surface collée à un pigment lamellaire au moyen d'un liant adhésif ;
**caractérisée en ce que**
ledit liant adhésif est une résine dissoute dans un solvant qui ne dissout pas ladite résine thermodurcissable ;
ledit solvant qui ne dissout pas ladite résine thermodurcissable possède un point d'ébullition dans la plage allant de 28 ˚C à 130 ˚C sous pression atmosphérique ; et
ledit liant adhésif est un oligomère possédant un poids moléculaire moyen en nombre dans la plage allant de 300 à 2000 et un point de ramollissement dans la plage allant de 30 ˚C à 180 ˚C.

2. Composition de revêtement en poudre selon la revendication 1, dans laquelle ledit pigment lamellaire est une lamelle d'aluminium.

3. Composition de revêtement en poudre selon la revendication 2, **caractérisée en ce que**
ladite lamelle d'aluminium possède une taille moyenne de particule dans la plage allant de 1 μm à 100 μm.

4. Film de revêtement obtenu par le revêtement par pulvérisation d'un membre de base avec la composition de revêtement en poudre selon l'une quelconque des revendications 1 à 3, suivie d'un thermodurcissement.

5. Procédé de fabrication d'une composition de revêtement en poudre, comprenant les étapes suivantes :

le mélange et le malaxage d'un pigment lamellaire, d'une poudre de résine thermodurcissable, d'un solvant qui ne dissout pas la résine thermodurcissable et d'un liant adhésif, et
le mouillage d'une substance résultante obtenue dans l'étape de mélange et de malaxage, puis le séchage de la substance mouillée tout en poursuivant son mélange et son malaxage.

6. Procédé de fabrication d'une composition de revêtement en poudre selon la revendication 5, **caractérisé en ce que**
ladite substance est maintenue dans une plage de températures allant de -5 ˚C à 50 ˚C pendant son mélange et son malaxage puis son séchage.

7. Procédé de fabrication d'une composition de revêtement en poudre selon la revendication 5 ou 6, **caractérisé en ce que**
l'étape de séchage est réalisée sous vide.

8. Composition de revêtement en poudre selon la revendication 1, **caractérisée en ce que**
ledit liant adhésif est d'au moins un type choisi dans le groupe constitué par une résine de type terpène, une résine de type terpène/phénol et une résine de type hydrogénée de type terpène.

9. Composition de revêtement en poudre obtenue par un procédé de fabrication de celle-ci comprenant les étapes de mélange et de malaxage d'un pigment lamellaire, d'une poudre de résine thermodurcissable, d'un solvant qui ne dissout pas la résine thermodurcissable et d'un liant adhésif, et de mouillage d'une substance résultante obtenue dans l'étape de mélange et de malaxage, puis le séchage de la substance mouillée tout en poursuivant son mélange et son malaxage ; **caractérisée en ce que** ladite composition de revêtement en poudre contient une poudre de résine thermodurcissable ayant une surface collée à un pigment lamellaire au moyen d'un liant adhésif ;
ledit liant adhésif est une résine dissoute dans un solvant qui ne dissout pas ladite résine thermodurcissable ;

ledit solvant qui ne dissout pas ladite résine thermodurcissable possède un point d'ébullition dans la plage allant de 28 ˚C à 130 ˚C sous pression atmosphérique ; et

ledit liant adhésif est un oligomère possédant un poids moléculaire moyen en nombre dans la plage allant de 300 à 2000 et un point de ramollissement dans la plage allant de 30 ˚C à 180 ˚C.

10. Composition de revêtement en poudre selon la revendication 9, dans laquelle ledit pigment lamellaire est une lamelle d'aluminium.

11. Composition de revêtement en poudre selon la revendication 10, **caractérisée en ce que** ladite lamelle d'aluminium possède une taille moyenne de particule dans la plage allant de 1 $\mu$m à 100 $\mu$m.

FIG.1

EP 1 445 290 B1

## FIG.2A EXAMPLE 2  200 ×  MAGNIFICATION

## FIG.2B COMPARATIVE EXAMPLE 1
### 300 × MAGNIFICATION

19

## FIG.3A EXAMPLE 2  1000 × MAGNIFICATION

## FIG.3B COMPARATIVE EXAMPLE 1
### 1000 × MAGNIFICATION

## FIG.4A EXAMPLE 3  300 × MAGNIFICATION

×300    0789 7.0kV  100μm

## FIG.4B COMPARATIVE EXAMPLE 2
### 300 × MAGNIFICATION

×300  0791 7.0kV  100μm

## FIG.5A EXAMPLE 3  1000 × MAGNIFICATION

## FIG.5B COMPARATIVE EXAMPLE 2
## 1000 × MAGNIFICATION

## FIG.6A EXAMPLE 4  300 × MAGNIFICATION

## FIG.6B COMPARATIVE EXAMPLE 3
### 300 × MAGNIFICATION

## FIG.7A EXAMPLE 4  1000 × MAGNIFICATION

## FIG.7B COMPARATIVE EXAMPLE 3
## 1000 × MAGNIFICATION

## FIG.8A EXAMPLE 5  300 × MAGNIFICATION

## FIG.8B COMPARATIVE EXAMPLE 4
## 300 × MAGNIFICATION

## FIG.9A EXAMPLE 5  1000× MAGNIFICATION

## FIG.9B COMPARATIVE EXAMPLE 4
## 1000× MAGNIFICATION

## FIG.10A EXAMPLE 1  300 × MAGNIFICATION

## FIG.10B EXAMPLE 1  2000 × MAGNIFICATION

## FIG.11A COMPARATIVE EXAMPLE 6
### 300 × MAGNIFICATION

## FIG.11B COMPARATIVE EXAMPLE 6
### 2000 × MAGNIFICATION

## FIG.12A EXAMPLE 7  300 × MAGNIFICATION

## FIG.12B EXAMPLE 7  1000 × MAGNIFICATION

FIG.13A EXAMPLE 8  300 × MAGNIFICATION

FIG.13B EXAMPLE 8  1000 × MAGNIFICATION

## FIG.14A COMPARATIVE EXAMPLE 9
### 300 × MAGNIFICATION

## FIG.14B COMPARATIVE EXAMPLE 9
### 1000 × MAGNIFICATION

**EP 1 445 290 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 51137725 A
- JP 9071734 A
- US 4138511 A